Europäisches Patentamt

European Patent Office

Office européen des brevets

(19)

(11) Veröffentlichungsnummer : **0 401 711 B1**

(12) # EUROPÄISCHE PATENTSCHRIFT

(45) Veröffentlichungstag der Patentschrift :
**02.11.94 Patentblatt 94/44**

(51) Int. Cl.$^5$ : **F21V 8/00**

(21) Anmeldenummer : **90110500.7**

(22) Anmeldetag : **01.06.90**

(54) **Lampenanordnung, insbesondere für eine Signaleinrichtung.**

(30) Priorität : **09.06.89 AT 1422/89**

(43) Veröffentlichungstag der Anmeldung :
**12.12.90 Patentblatt 90/50**

(45) Bekanntmachung des Hinweises auf die
Patenterteilung :
**02.11.94 Patentblatt 94/44**

(84) Benannte Vertragsstaaten :
**AT BE CH DE DK ES FR GB GR IT LI LU NL SE**

(56) Entgegenhaltungen :
**DE-A- 1 547 282**
**FR-A- 2 216 634**
**FR-A- 2 262 842**
**FR-A- 2 365 814**
**GB-A- 2 044 908**
**GB-A- 2 073 930**

(56) Entgegenhaltungen :
**US-A- 3 455 622**
**US-A- 4 241 382**
**PATENT ABSTRACTS OF JAPAN, Band 12, Nr.**
**329 (P-754)[3176], 7. September 1988; & JP-**
**A-63 92 909 (ALPS ELECTRIC CO., LTD) 23-**
**04-1988**

(73) Patentinhaber : **DR.TECHN. JOSEF ZELISKO,**
**FABRIK FÜR ELEKTROTECHNIK UND**
**MASCHINENBAU GESELLSCHAFT m.b.H.**
**Steinfelder Gasse 12**
**A-2340 Mödling (AT)**

(72) Erfinder : **Pöltl, Johann**
**Maynologasse 36**
**A-2500 Baden (AT)**

(74) Vertreter : **Secklehner, Günter, Dr.**
**Rechtsanwalt,**
**Pyhrnstrasse 1**
**A-8940 Liezen (AT)**

EP 0 401 711 B1

## Beschreibung

Die Erfindung betrifft eine Lampenanordnung, insbesondere für Signaleinrichtungen mit einer in einem Lampengehäuse angeordneten Lampe und mit einem von dieser distanzierten Strahler und einer zwischen dem Lampengehäuse und dem Strahler angeordneten Lichtübertragungsvorrichtung.

Eine solche ist bekannt aus FR-A-2 216 634.

Es ist auch bereits bekannt - gemäß dem Buch "Bauelemente der Optik 5. Auflage von G. Schröder, erschienen im Karl-Hanser-Verlag München 1987 - ein Lichtübertragungselement vorzusehen, mit welchem der Austrittswinkel eines Lichtstrahls bzw. eines Lichtstrahlenbündels gegenüber einem Eintrittswinkel dadurch verändert wird, daß ein konischer Lichtleiter verwendet wird. Wird der konische Lichtleiter derart eingesetzt, daß ein Austrittsdurchmesser größer ist als ein Eintrittsdurchmesser, so ist ein Abstrahlungswinkel des Lichtstrahls bzw. Lichtstrahlenbündels kleiner als ein Einfallswinkel derselben. Als nachteilig ist bei diesen konischen Lichtleitern angeführt, daß man das Licht nicht "um die Ecke" leiten kann. Demgemäß wird vorgeschlagen, für derartige Anwendungsfälle zylindrische Lichtleiter zu verwenden.

Der vorliegenden Erfindung liegt nunmehr die Aufgabe zugrunde, eine Lampenanordnung der eingangs genannten Art zu schaffen, bei der die Übertragungsverluste, insbesondere bei einer handelsüblichen Fadenglühlampe, zwischen dieser und dem Strahler verringert und eine gleichmäßige Ausleuchtung des Strahlers, auch wenn dieser in einer größeren Entfernung von der Lampe angeordnet ist, ermöglicht.

Diese Aufgabe wird dadurch gelöst, daß die Lichtübertragungsvorrichtung eine Mehrzahl von Lichtleiter umfaßt, und daß zwischen den der Lampe zugewandten Stirnseiten der Lichtleiter und der Lampe ein mit einem Innenkonus versehenes Lichtübertragungselement vorgesehen ist und der Innenkonus sich in Richtung der Stirnseiten der Lichtleiter erweitert. Von Vorteil ist bei dieser Lösung, daß zur Lichtübertragung zwischen der Lampe und dem Strahler nunmehr Lichtleiter verwendet werden können, sodaß die Übertragungsverluste auch bei größeren Distanzen gering gehalten werden können. Dazu kommt, daß die Lichtenergie der Lampe aber durch das mit einem Innenkonus versehene Lichtübertragungselement erheblich gesteigert werden kann und die Abstrahlungsverluste bzw. die Streuverluste beim Eintritt des von der Lampe ausgestrahlten Lichtes gering gehalten werden können. Dies wird vor allem dadurch erzielt, daß mit dem sich in Richtung der Lichtleiter erweiternden Innenkonus ein Abstrahlungswinkel des aus dem Lichtübertragungselement austretenden Lichtbündels erreichbar ist, der einer dem optimalen Einstrahlungswinkel der jeweils verwendeten Lichtleiter entsprechende Größe angepaßt ist. Dadurch können unnötige Mehrfachreflexionen verhindert und ein Streuverlust beim Eindringen des Strahlenbündels in die Lichtleiter ausgeschalten werden.

Nach einer weiteren Ausführungsform ist vorgesehen, daß die Lampe in einem Brennpunkt eines Ellipsoidreflektors angeordnet ist, dessen weiterer Brennpunkt in einer die Stirnseite des Lichtübertragungselementes aufnehmenden, senkrecht zur Innenkonusachse verlaufenden Ebene angeordnet ist, wodurch es möglich ist, einen Großteil des von der Lampe in einer Vielzahl von Raumrichtungen abgestrahlten Lichtstromes auf den Eintrittsbereich des Lichtübertragungselementes zu reflektieren, sodaß ein überwiegender Anteil der von der Lampe ausgestrahlten Lichtenergie in das Lichtübertragungselement hineinreflektiert werden kann.

Vorteilhaft ist es weiters, wenn sich der Ellipsoidreflektor von der dem Lichtübertragungselement abgewendeten Seite bis in den Bereich, insbesondere mittig, zwischen den beiden Brennpunkten erstreckt, da dadurch der Einfallwinkel der vom Ellipsoidreflektor in Richtung des von der Lampe distanzierten Brennpunktes abgestrahlten Lichtstrahlung in einfacher Weise begrenzt werden kann.

Weiters ist es aber auch möglich, daß der Bereich zwischen dem Ellipsoidreflektor und dem Lichtübertragungselement durch einen sphärischen, insbesondere kugelkalottenförmigen Reflektor verschlossen ist, dessen Mittelpunkt im Bereich des der Lampe zugeordneten Brennpunkts des Ellipsoidreflektors angeordnet ist, wodurch die aus den verschiedenen Raumrichtungen auf den Reflektor auftreffenden Lichtstrahlen nahe am Brennpunkt im Bereich der Lampe vorbei auf den Ellipsoidreflektor zurückgestrahlt werden und von diesem in gewünschtem Winkel in Richtung des Lichtübertragungselementes zurückgeworfen werden.

Es ist aber auch möglich, daß der Radius des kugelkalottenförmigen Reflektors dem Radius des Ellipsoidreflektors in einer senkrecht zur Innenkonusachse ausgerichteten, durch den die Lampe aufnehmenden Brennpunkt verlaufende Ebene entspricht, wodurch die Streuverluste im Übergangsbereich zwischen den Ellipsoidreflektor und dem sphärischen Reflektor zusätzlich verringert werden können.

Nach einer anderen Weiterbildung ist vorgesehen, daß das vom Ellipsoidreflektor reflektierte Lichstrahlenbündel bezogen auf die Innenkonusachse einen in Richtung der Lampe gerichteten, maximalen Einfallswinkel von ca. 40° bis 90°, bevorzugt 67° aufweist, wodurch mit einer günstigen Anzahl an Umlenkungen der einzelnen Lichstrahlen ein Abstrahlungswinkel aus dem Lichtübertragungselement in Richtung der Lichtleiter erzielt werden kann, der dem gewünschten Einstrahlungswinkel am nächsten kommt.

Weiters ist es auch möglich, daß eine Länge zwischen dem von der Lampe abgewendeten Brennpunkt des Ellipsoidreflektors und den der Lampe zugewandten Stirnseiten der Enden der Lichtleiter sowie der Innenkonuswinkel derart bemessen ist, daß ein Abstrahlungswinkel des aus dem Lichtübertragungselement austretenden Lichtbündels bezogen auf die Innenkonusachse zwischen 15° und 40°, bevorzugt ca. 26° beträgt, wodurch bei entsprechender Anpassung der Ausbildung des Lichtübertragungselementes die Abstrahlungswinkel an die jeweils verwendeten Lichtleiter angepaßt werden können, sodaß bei unterschiedlichen Lichtleitermaterialien die gleichen Vorteile durch die Verwendung des Lichtübertragungselementes erreichbar sind.

Von Vorteil ist es dabei, wenn die Länge des Lichtübertragungselementes und der Innenkonuswinkel derart bemessen sind, daß ein Lichtstrahl zwischen zwei- und sechsmal, bevorzugt maximal 4mal innerhalb des Lichtübertragungselementes umgelenkt wird. Dadurch können die Reflexionsverluste der auszurichtenden Lichtstrahlen möglichst gering gehalten werden.

Weiters ist es auch möglich, daß ein Durchmesser einer Austrittsöffnung des Lichtübertragungselementes in etwa einem Durchmesser des Bündels der Lichtleiter entspricht, wodurch die Anordnung zusätzlicher Linsen im Übergangsbereich zwischen dem Lichtübertragungselement und den diesem zugewandten Enden des Lichtleitersbündels eingespart werden.

Nach einer anderen Ausbildung ist vorgesehen, daß zwischen der Austrittsöffnung und den Stirnseiten der dieser zugewandten Enden der Lichtleiter ein Filter, insbesondere ein Farbfilter, angeordnet ist, wodurch die Farbe des Lichtes, welches vom Strahler abgestrahlt werden soll, exakt festgelegt werden kann.

Von Vorteil ist es weiters, wenn der Innenkonus mit einer verspiegelten Oberfläche versehen ist, da dadurch Reflexions- und Absorptionsverluste zusätzlich verhindert werden.

Weiters ist es auch möglich, daß der Innenkonus durch einen Innenkegel gebildet ist, da dadurch über die gesamte Querschnittsfläche der Auftrittsöffnung aus dem Lichtübertragungselement eine gleichmäßige Ausleuchtung mit gleicher Leuchtdichte sichergestellt werden kann.

Nach einer anderen Weiterbildung ist vorgesehen, daß der Ellipsoidreflektor mit einer spektral-selektiven Verspiegelung versehen ist, die alle für den gewünschten Farbton nicht benötigten Wellenlängen aus dem Lichtspektrum der Lampe sowie auch die Infrarotstrahlen ungehindert durchtreten läßt, wodurch eine Wärmebelastung der an die Lampe anschließenden Bereiche der Lichtübertragungsvorrichtung mit Vorteil einfach verringert werden kann. Dazu kommt, daß, wie dies vor allem bei Signalen für Verkehrssicherungseinrichtungen, insbesondere bei Eisenbahnen sehr wichtig ist, die Abgabe von Licht mit falscher Farbe grundsätzlich ausgeschaltet ist. Dadurch leuchtet entweder der Strahler in dem gewünschten Licht oder gar nicht. Durch Dienstvorschriften kann dann einfach sichergestellt werden, daß bei einem Signal, bei welchem kein Strahler leuchtet, grundsätzlich davon auszugehen ist, daß das Signal "HALT" zeigt. Damit ist sichergestellt, daß der Zug angehalten wird und der Lokomotivführer über Funk oder Telefon die Stellung des Signals abfragen muß.

Vorteilhaft ist es weiters auch, wenn der kugelkalottenförmige Reflektor mit einer spektral-selektiven Verspiegelung versehen ist, die alle für den gewünschten Farbton nicht benötigten Wellenlängen aus dem Lichtspektrum der Lampe sowie auch die Infrarotstrahlen ungehindert durchtreten läßt, da damit auch von diesem Reflektor jene Lichtstrahlen, die vorher von dem Ellipsoidreflektor noch nicht reflektiert wurden, in Richtung des im Bereich der Lampe angeordneten Brennpunktes reflektiert werden. Weisen sie eine für die abzustrahlende Farbe gewünschte Wellenlänge auf, so werden sie vom Ellipsoidreflektor in den Brennpunkt im Bereich des Innenkreises reflektiert.

Nach einer anderen Weiterbildung ist vorgesehen, daß die Lampe zwei Glühfäden aufweist, wodurch mit einer einfachen Schaltung beim Ausfall eines Glühfadens automatisch der zweite Glühfaden der Lampe eingeschaltet und dieser Betriebszustand dem Bedienungspersonal signalisiert werden kann.

Es ist aber auch möglich, daß der Sockel der Lampe den Ellipsoidreflektor durchsetzt, da dadurch die Baugröße des Ellipsoidreflektors möglichst gering gehalten werden kann und trotzdem ein Großteil der abgestrahlten Lichtenergie zum Strahler weitergeleitet werden kann.

Es ist aber auch möglich, daß ein Ansatz des Ellipsoidreflektors die Lampenfassung lagert, da dadurch in einfacher Weise eine exakte Ausrichtung der Lampen auf den Brennpunkt des Ellipsoidreflektors möglich ist.

Von Vorteil ist es weiters, wenn der Innenkonus, der kugelkalottenförmige Reflektor und bzw. oder eine Aufnahmeöffnung für die Haltevorrichtung des Lichtleiterbündels und bzw. oder der Ellipsoidreflektor einen gemeinsamen Bauteil bilden, da dadurch exakte geometrische Verhältnisse in den verschiedenen Bereichen der Lichtübertragungsvorrichtungen eingehalten werden können und somit Übertragungsverluste durch Achsverschiebungen und dgl. ausgeschalten werden.

Nach einer anderen Weiterbildung ist vorgesehen, daß der Bauteil aus mehreren Teilen, bevorzugt aus zwei Teilen besteht und vorzugsweise in einer die Innenkonusachse durchsetzenden Ebene geteilt ist, wodurch die Herstellung erheblich vereinfacht und trotzdem exakte geometrische Verhältnisse eingehalten werden können.

Nach einer anderen Weiterbildung ist vorgesehen, daß der Ellipsoidreflektor über eine senkrecht zur Innenkonusachse verlaufende Schwenkachse mit dem Bauteil verbunden ist, wodurch ein Lampenwechsel wesentlich vereinfacht wird.

Nach einer anderen Ausführungsform ist vorgesehen, daß der Ellipsoidreflektor auf der von der Schwenkachse abgewendeten Seite über eine Arretiervorrichtung, insbesondere eine Rastvorrichtung mit dem Bauteil verriegelbar ist, wodurch sichergestellt ist, daß nach einem Lampentausch der Ellipsoidreflektor wieder in seiner vorgesehenen Position relativ zum Lichtübertragungselement angeordnet ist.

Von Vorteil ist es aber auch, wenn die Teile des Bauteils mit deckungsgleich gegenüberliegenden Teilen von Führungsvorrichtungen, insbesondere Paßstiften und Paßbohrungen versehen sind, da dadurch der Montageaufwand für das Zusammenbauen des Lichtübertragungselementes in vorteilhafter Weise gering gehalten werden kann.

Weiters ist es auch möglich, daß die zwischen dem Reflektor und dem Ellipsoidreflektor verbleibende Kreisringfläche verspiegelt, insbesondere spektral selektiv verspiegelt, ist, wodurch unerwünschte Reflexionen von Lichtstrahlen im Ellipsoidreflektor verhindert werden.

Weiters ist es auch möglich, daß der Ellipsoidreflektor aus mehreren Teilen besteht, wodurch der Einbau der Lampenfassung bzw. der Lampentausch noch einfacher durchgeführt werden kann.

Nach einer anderen Ausbildung ist vorgesehen, daß zwischen dem Ellipsoidreflektor und dem Reflektor bzw. dem Bauteil ineinander gegenüberliegenden Bereichen Lüftungsschlitze angeordnet sind, wodurch die Restwärme, insbesondere durch die von der Lampe abgestrahlten Infrarotstrahlen aus dem Bereich der Reflektoren einfach abgeführt werden kann, sodaß Beschädigungen durch Überhitzungen vermieden werden.

Vorteilhaft ist auch eine Weiterbildung, bei der zwischen den der Lampe zugewandten Enden der Lichtleiter und der Lampe mehrere jeweils mit einem Innenkonus versehene Lichtübertragungselemente vorgesehen sind, wodurch für unterschiedlich dicke Lichtleiterbündel lediglich die Anzahl von standardisierten Lichtübertragungselementen zu verändern ist.

Schließlich ist es auch möglich, daß das oder die Lichtübertragungselemente durch zumindest über einen Teil ihrer Länge konische Lichtleiter gebildet sind, die sich in Richtung der Stirnseiten der zu einem Bündel zusammengefaßten, zylindrischen Lichtleiter erweitern, wodurch in vorteilhafter Weise die bekannten Eigenschaften der konischen Lichtleiter mit denjenigen der zylindrischen Lichtleiter, die auch bei Ablenkungen des Lichtübertragungsweges um 90° eine einwandfreie Reflexion ermöglichen, kombiniert werden können.

Zum besseren Verständnis der Erfindung wird diese im nachfolgenden anhand der in den Zeichnungen gezeigten Ausführungsbeispiele näher erläutert.

Es zeigen:

Fig. 1      eine erfindungsgemäße Signaleinrichtung in Seitenansicht teilweise geschnitten in vereinfachter schematischer Darstellung;

Fig. 2      eine Stirnansicht des sphärischen Reflektors geschnitten, gemäß den Linien II-II in Fig.1;

Fig. 3      eine Stirnansicht des Lichtübertragungselementes im Schnitt, gemäß den Linien III-III in Fig.1;

Fig. 4      die Lichtübertragungsvorrichtung in Seitenansicht und stark vereinfachter schematischer Darstellung mit dem Verlauf einiger schematisch dargestellter Lichtstrahlen;

Fig. 5      eine andere Ausführungsform einer Lichtübertragungsvorrichtung in Seitenansicht unter Verwendung mehrerer aneinander unmittelbar benachbart angeordneter Lichtübertragungselemente geschnitten, gemäß den Linien V-V in Fig.7;

Fig. 6      die Lichtübertragungsvorrichtung in Stirnansicht, gemäß Pfeil VI in Fig.5;

Fig. 7      die Lichtübertragungsvorrichtung in Stirnansicht, gemäß Pfeil VII in Fig.5.

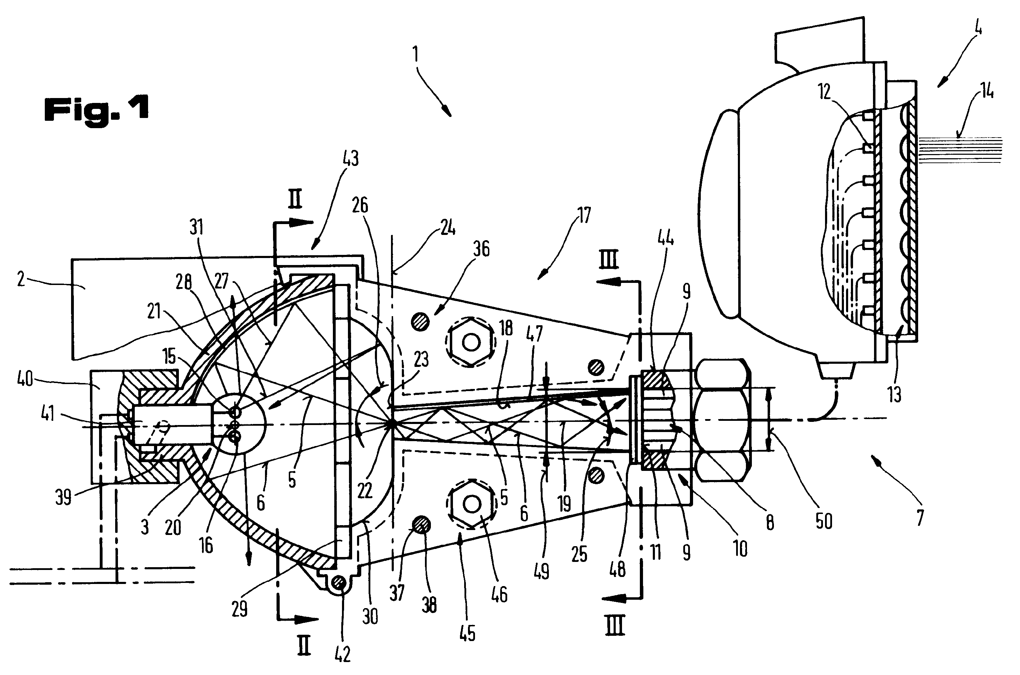

In Fig.1 ist eine Lampenanordnung 1 gezeigt, wie sie insbesondere bei Signaleinrichtungen, beispielsweise bei Eisenbahnsignalen eingesetzt wird. Diese Lampenanordnung 1 besteht aus einer in einem Lampengehäuse 2 angeordneten Lampe 3 und einem von dieser distanzierten Strahler 4. Zum Übertragen des von der Lampe 3 ausgestrahlten schematisch durch Lichtstrahlen 5,6 angedeuteten Lichtstromes ist eine Lichtübertragungsvorrichtung 7 zwischen der Lampe 3 und dem Strahler 4 angeordnet. Dies ermöglicht nunmehr, daß die Lampe 3, die bei länger andauerndem Betrieb bzw. nach einer gewissen Anzahl von Betriebsstunden zu wechseln ist, örtlich distanziert vom Strahler 4 angeordnet werden kann, sodaß ein derartiger Austauschvorgang wesentlich leichter durchzuführen ist. So ist es unter anderem möglich, bei Eisenbahnsignalen die Lampe 3 am Signalmast in einer normalen Arbeitshöhe über dem Erdboden seitlich des Gleises anzuordnen, sodaß ein Austausch der Lampe 3 ungehindert vom Zugsverkehr und damit ohne Risiko für den Bediensteten und distanziert von dem den Strahler 4 aufnehmenden, oberhalb des Gleises oder seitlich desselben angeordneten Signalschild erfolgen kann.

Zum Weiterleiten der Lichtstrahlung, die von der Lampe 3 ausgeht und durch die Lichtstrahlen 5,6 schematisch angedeutet ist, umfaßt die Lichtübertragungsvorrichtung 7 ein Bündel 8 aus einer Mehrzahl von Lichtleitern 9, wobei hierfür zylindrische Lichtleiter sowohl aus Kunststoff als auch Glas Verwendung finden können. Die Lichtleiter 9 sind mit ihren Enden in einer Haltevorrichtung 10 positioniert und Stirnseiten 11 der Lichtleiter 9 schließen bündig mit der Haltevorrichtung 10 ab. Die Lichtleiter 9 erstrecken sich dann bis zu Enden 12 im Bereich des Strahlers 4, die beispielsweise jeweils einer Linsenanordnung 13 zugeordnet sind, die ein aus nahezu Parallellicht bestehendes Lichtbündel 14 bzw. ein nur ganz geringfügig konisches Lichtbündel aussendet. Durch die über den Strahler 4 verteilten Linsenanordnungen 13 wird ein zusammenhängendes Signalbild hergestellt.

Um herkömmliche Glühlampen mit einem oder zwei Glühfäden 15 bzw. 16 bei derartigen Lampenanordnungen einsetzen zu können, ist zwischen der Lampe 3 und den Stirnseiten 11 des Bündels 8 der Lichtleiter 9 ein Lichtübertragungselement 17 angeordnet, welches einen sich in Richtung der Stirnseiten 11 der Lichtleiter 9 erweiternden Innenkonus 18 aufweist. Der Innenkonus 18 ist mit seiner Innenkonusachse 19 zentrisch auf das Bündel 8 aus den einzelnen Lichtleitern 9 ausgerichtet, wobei die Lampe 3 ebenfalls zentrisch zur Innenkonusachse 19 angeordnet ist. Bevorzugt ist der Innenkonus 18 als Kegelstumpf ausgebildet, es ist aber ebenso möglich, diesen z.B. als vieleckige Pyramide auszubilden.

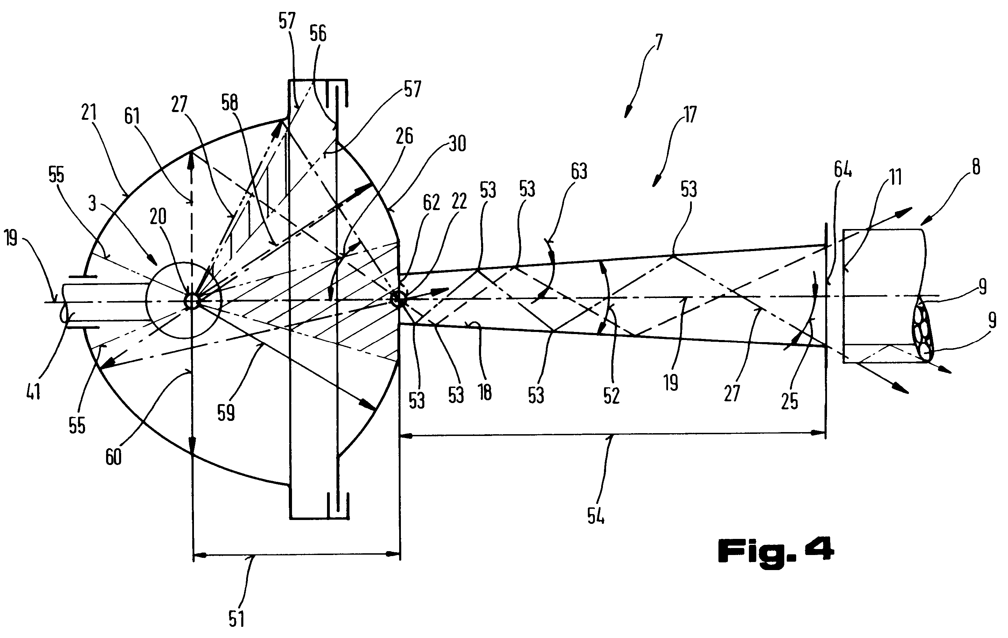

Bei derartigen Lampenanordnungen 1 ist es nunmehr wesentlich, daß ein Großteil des von der Lampe 3 abgestrahlten Lichtstromes zur Herstellung des Signalbildes bzw. der Lichtbündel 14 herangezogen werden kann. Demzufolge sind die Lichtverluste im Zuge der Lichtübertragung von der Lampe 3 bis zum Lichtbündel 14 so gering wie möglich zu halten. Dies wird beim vorliegenden Ausführungsbeispiel nunmehr dadurch bewirkt, daß die Lampe 3 mit ihren Glühfäden 15,16 in einem Brennpunkt 20 eines Ellipsoidreflektors 21 angeordnet ist. Die von der Lampe 3 ausgehenden Lichtstrahlen 5,6 treffen daher auf den Ellipsoidreflektor 21 auf und werden von diesem in den zweiten Brennpunkt 22 reflektiert. Die Anordnung ist so getroffen, daß sich dieser Brennpunkt 22 nunmehr in einer eine Stirnseite 23 des Lichtübertragungselementes 17 aufnehmenden, durch eine strich-punktierte Linie schematisch angedeuteten Ebene 24 auf der Innenkonusachse 19 angeordnet ist. Damit werden alle von der Lampe direkt auf den Ellipsoidreflektor 21 auftreffenden Lichtstrahlen zum Brennpunkt 22 reflektiert und treten dann in den Innenkonus 18 des Lichtübertragungselementes 17 ein. Wie schematisch anhand der Lichtstrahlen 5,6 angedeutet und im folgenden anhand der Fig.4 noch näher erläutert werden wird, wird durch mehrmalige Reflexion der Lichtstrahlen 5,6 im Innenkonus 18 ein maximaler Abstrahlungswinkel 25 erreicht, der kleiner ist als ein maximaler Einfallswinkel 26, wie er beispielsweise anhand des Lichtstrahles 27 gezeigt ist. Dies bewirkt, daß die Anzahl der Reflexionen im nachfolgenden Lichtleiter 9 in einem Ausmaß zwischen 2- bis 6mal erfolgt, die einen allzu großen Energieverlust verhindert.

Des weiteren kann der Ellipsoidreflektor 21 mit einer spektral selektiven Verspiegelung 28 versehen sein. Diese Verspiegelung ist in den meisten Fällen bei Signaleinrichtungen deshalb möglich, da die einzelnen Strahler 4 meist ohnehin nur eine definierte Farbe abstrahlen müssen. Durch diese spektral selektive Verspiegelung 28 kann nunmehr zur Realisierung des gewünschten Farbtones aus den entsprechend dem Lampenspektrum hergestellten Lichtstrahlen mit unterschiedlichen Wellenlängen jener Anteil von nicht benötigten Wellenlängen und auch die Infrarotstrahlungen die Verspiegelung 28 ungehindert passieren, während nur die für den Farbton benötigten Wellenlängen der Lichtstrahlungen von der Verspiegelung 28 in Richtung des Lichtübertragungselementes 17 reflektiert werden. Der Vorteil dieser Weiterbildung liegt vor allem darin, daß im Bereich der Stirnseiten 11 des Bündels 8 der Lichtleiter 9 ein gleichförmiges, färbiges Kaltlicht vorliegt und die Temperaturbelastung der der Lampe 3 nachfolgenden Bauteile gering gehalten werden kann.

Um die innerhalb des Ellipsoidreflektors 21 verbleibende Wärme abzuführen, ist weiters vorgesehen, daß zwischen dem Lichtübertragungselement 17 und dem Ellipsoidreflektor 21 am Umfang des Ellipsoidreflektors 21 einander gegenüberliegende Schlitze 29 vor allem in vertikaler Richtung übereinander angeordnet werden, sodaß durch die Thermosifonwirkung die warme Luft aus dem Ellipsoidreflektor 21 nach oben entweichen kann.

Um die Lichtausbeute der von der Lampe 3 abgegebenen Lichtmenge noch zu erhöhen, ist in dem der Lampe 3 gegenüberliegenden Stirnendbereich des Lichtübertragungselementes 17 ein Reflektor 30 angeordnet, der insbesondere kugelkalottenförmig ausgebildet ist. Er kann aber ebenso auch parabelförmig oder in Art einer Hyperbel oder dgl. ausgebildet sein. Dieser Reflektor 30 bewirkt, daß von der Lampe 3 direkt in Richtung des Lichtübertragungselementes 17 abgestrahlte Lichtstrahlen 31 zurück in Richtung des Brennpunktes 20 auf den Ellipsoidreflektor 21 reflektiert werden, von welchem sie dann in den Brennpunkt 22 zurückgeworfen werden. Dies ist deshalb möglich, da ein Mittelpunkt des Reflektors 30, wenn dieser kugelkalottenförmig ausgebildet ist, sich in etwa im Bereich des Brennpunktes 20 befindet. Dadurch werden die von der Lampe kommenden Lichtstrahlen immer wieder in den Brennpunkt 20 und an diesem vorbei auf den Ellipsoidreflektor 21 zurückgeworfen, von dem aus sie bis zum weiteren Brennpunkt 22 und damit in den Innenkonus 18 des Lichtübertragungselementes 17 reflektiert werden.

Wie im nachfolgenden noch näher erläutert werden wird, hat diese Anordnung des Reflektors 30 auch noch den Vorteil, daß der Einfallswinkel 26, wie anhand des Lichtstrahls 27 gezeigt, begrenzt werden kann, ohne daß, wie beispielsweise anhand des Lichtstrahles 31 gezeigt, Lichtstrahlen, die bei einem Auftreten auf einen durchgehenden Ellipsoidreflektor und bei einem größeren Einfallswinkel 26 in dem Brennpunkt 22 reflektiert werden würden, verloren gehen.

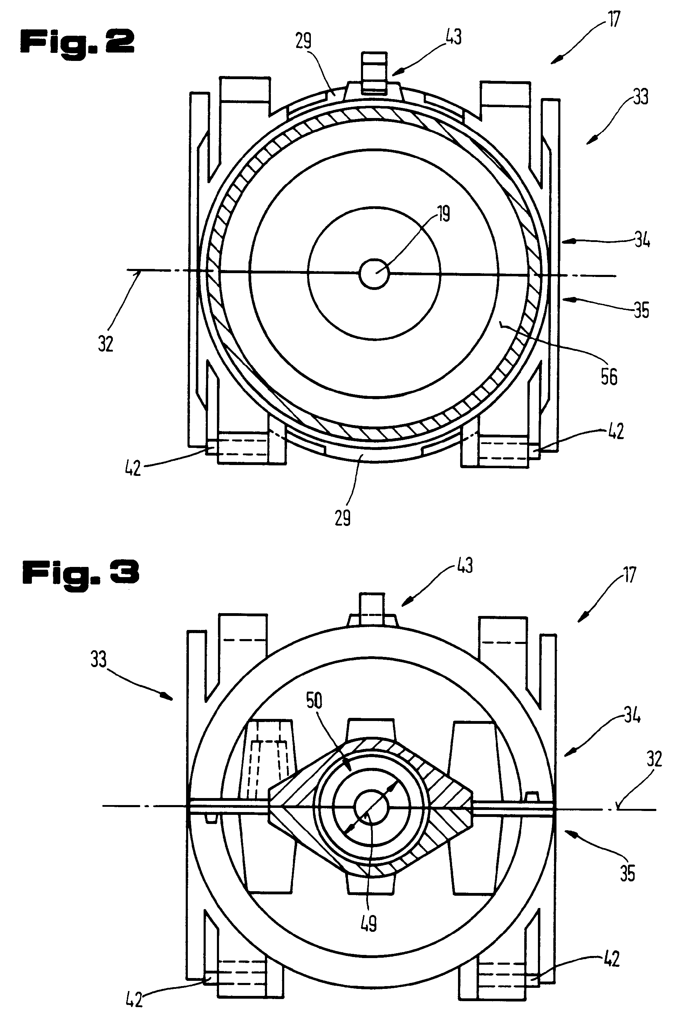

Wie in Verbindung mit den Fig.2 und 3 besser zu ersehen ist, ist das Lichtübertragungselement 17 ein in einer durch die Innenkonusachse 19 gehenden, durch strich-punktierte Linien angedeuteten Ebene 32 geteilter Bauteil 33 und besteht aus den Teilen 34,35. Die beiden Teile 34 und 35 sind mit deckungsgleichen, gegenüberliegenden Teilen von Führungsvorrichtungen 36 insbesondere Paßbohrungen 37 und Paßstiften 38 aufeinander ausgerichtet.

Der Ellipsoidreflektor 21, der im vorliegenden Ausführungsbeispiel einstückig ausgebildet ist und der auch mit einem Ansatz 39 versehen sein kann, der eine Lampenfassung 40 lagert, sodaß ein Sockel 41 der Lampe, die beispielsweise über einen Bajonettverschluß in der Lampenfassung 40 gehalten ist den Ellipsoidreflektor 21 durchsetzt, ist über eine Schwenkachse 42 auf dem Lichtübertragungselement 17, beispielsweise auf dem Teil 35 desselben schwenkbar gelagert. Um einen einfachen Austausch der Lampe 3 zu ermöglichen und gleichzeitig eine ständig gleiche Position des Ellipsoidreflektors 21 relativ zum Lichtübertragungselement 17 zu bewirken, ist der Ellipsoidreflektor 21 auf der von der Schwenkachse 42 abgewandten Seite über eine durch eine Rastvorrichtung 43 gebildete Arretiervorrichtung mit dem Lichtübertragungselement 17 bzw. dem Teil 34 verbunden. Die Arretiervorrichtung kann anstelle der Rastvorrichtung 43 auch durch eine andere beliebige Kupplungsvorrichtung, beispielsweise auch durch eine Schraubverbindung mit dem Lichtübertragungselement 17 verbunden sein.

Vorteilhaft ist es weiters, wenn, wie beim vorliegenden Ausführungsbeispiel der Reflektor 30, der Innenkonus 18 und eine Aufnahmeöffnung 44 für die Haltevorrichtung 10 des Bündels 8 der Lichtleiter 9 einstückig ausgebildet sind. Dadurch wird erreicht, daß die genannten Teile unabhängig von ihrer Einbaulage jeweils exakt auf die Innenkonusachse 19 ausgerichtet sind.

Die beiden Teile 34 und 35 des Lichtübertragungselementes 17 sind über Verbindungsvorrichtungen 45 beispielsweise Mutter- und Schraubenanordnungen, von welchen in Fig.1 beispielsweise die Muttern 46 zu sehen sind, verbunden und zueinander verspannt.

Um den Lichtverlust bei den einzelnen Reflexionen im Lichtübertragungselement 17 möglichst gering zu halten, ist es weiters möglich, den Innenkonus 18 mit einer verspiegelten Oberfläche 47 zu versehen. Des weiteren kann vor dem Eintritt der Lichtstrahlen 5,6 in die Lichtleiter 9 ein Farbfilter 48 vorgesehen sein, sodaß in jedem Fall auch dann, wenn die spektral selektive Verspiegelung aus welchen Gründen immer Lichtstrahlen mit nicht gewünschten Wellenlängen reflektiert, sichergestellt ist, daß nur Licht in der gewünschten Farbe zum Strahler 4 gelangt.

Von Vorteil ist es aber auch, wenn ein Durchmesser 49 einer Austrittsöffnung in etwa einem Durchmesser 50 des Bündels 8 der Lichtleiter 9 entspricht.

Lediglich der Ordnung halber soll noch darauf hingewiesen werden, daß die Größenverhältnisse der Lampe 3 bzw. des Ellipsoidreflektors 21 bzw. des Reflektors 30 und des Lichtübertragungselementes 17 im Verhältnis zum Strahler 4 stark verzerrt sind und die Darstellung schematisch vereinfacht erfolgt ist. Üblicherweise hat ein Strahler einen Durchmesser von 200 mm bis 300 mm.

In Fig.4 soll anhand einer schematischen Darstellung des Teils der Lichtübertragungsvorrichtung 7 zwischen der Lampe 3 und dem Bündel 8 aus Lichtleitern 9 die Funktion derselben noch etwas näher erläutert werden.

Wie aus dieser Darstellung ersichtlich, erstreckt sich der Ellipsoidreflektor 21 von der Lampe 3 bis etwa zur Mitte einer Distanz 51 zwischen den beiden Brennpunkten 20 und 22. Dies bewirkt, daß ein direkt von der Lampe ausgehender Lichtstrahl 27, der gerade noch vom Ellipsoidreflektor 21 in seinem dem Lichtübertragungselement 17 zugewandten Endbereich reflektiert wird, einen maximalen Einfallswinkel 26 aufweist, der im vorliegenden Fall beispielsweise 67° beträgt. Dieser Lichtstrahl 27 wird durch den Brennpunkt 22 hindurch in den Innenkonus 18 reflektiert. Der Innenkonus 18 weist einen Konuswinkel 52 von z.B. 8° auf. Dies bewirkt, daß ein unter dem maximalen Einfallswinkel 26 einfallende Lichtstrahl an den mit 53 bezeichneten Stellen im Innenkonus viermal reflektiert wird, bis er das Lichtübertragungselement 17 verläßt. Durch die Wahl des Konuswinkels 52 und einer Länge 54 des Innenkonus 18 wird ein Abstrahlungswinkel 25 auf einen Maximalwert von im vorliegenden Ausführungsbeispiel 24,5° begrenzt. Damit werden optimale Eintrittsbedingungen der einzelnen Lichtstrahlen, insbesondere des Lichtstrahls 27 in die Lichtleiter 9 sichergestellt.

Geht man davon aus, daß eine Lampe den Vollraum bestrahlt, so ist

$$\Omega = 4 * \pi * sr = 12,56 \text{ sr}$$ bei einem Lichtstrom von 400 Lumen.

Da der Sockel 41 den Ellipsoidreflektor 21 durchsetzt, ist ein durch die beiden strichzweipunktierten Linien 55 begrenzter Bereich abgeschattet, und es kann in diesem das von der Lampe austretenden Licht nicht reflektiert werden. Dazu kommt, daß in einem Übergangsbereich der durch eine Kreisringfläche 56 definiert ist, zwischen dem Ellipsoidreflektor 21 und dem sphärischen, insbesondere kugelkalottenförmigen Reflektor 30 ein Teil des Lichtstromes ebenfalls verloren geht, wobei dieser Bereich in Fig.4 durch die Linien 57 - strichzweipunktiert - ebenfalls eingegrenzt ist. Der Raumwinkel wird dadurch um 1,77 sr verringert und der Raumbereich, der für die ausnutzbare Lichtstärke zur Verfügung steht, reduziert sich daher auf 10,21 sr. Dies entspricht etwa einem Lichtstrom von 346 Lumen.

Wie weiters aus der Darstellung im Bereich des Lichtübertragungselementes 17 zu ersehen ist, werden beispielsweise Lichtstrahlen 58 - strich-punktiert - die auf den kugelkalottenförmigen Reflektor 30 auftreffen, von diesem zurück auf den Ellipsoidreflektor 21 reflektiert. Diese Reflexion erfolgt dabei im wesentlichen durch den Brennpunkt 20 bzw. an diesem knapp vorbei, da der kugelkalottenförmige Reflektor einen Radius 59 aufweist, der einem Radius 60 des Ellipsoidreflektors 21 in einer durch den Brennpunkt 20 gehenden senkrecht zur Innenkonusachse 19 verlaufenden Ebene entspricht. Durch die Ausbildung dieses sphärischen Reflektors 30 werden die Lichtstrahlen 58 knapp neben dem im Brennpunkt 20 befindenden Glühwendel zusammenlaufend reflektiert und gelangen dann auf den Ellipsoidreflektor 21 von welchem sie, wie aus dem strich-punktiert dargestellten Lichtstrahl 58 zu ersehen ist, über den Brennpunkt 22 in den Innenkonus 18 eintreten. Damit kann auch der Raumbereich zwischen den durch den Sockel 41 und den durch die Kreisringfläche 56 abgeschatteten Bereichen genutzt werden.

Dagegen werden jene Lichtstrahlen, die zwischen den Linien 55 und den diesen nächstliegenden in Richtung des Reflektors 30 liegenden Linien 57 auf den Ellipsoidreflektor 21 auftreffen, wie z.B. der Lichtstrahl 61, direkt in den Brennpunkt 22 reflektiert und treten dort in das Lichtübertragungselement 17 ein.

Geht man nun davon aus, daß beim Durchtreten der Lichtstrahlen 27 und 58 bzw. eines Lichtstrahls 61 - strichliert dargestellt - der dreimal im Bereich der Stellen 53 innerhalb des Innenkonus 18 reflektiert wird - sich durchschnittlich eine 4,5-malige Reflexion ergibt, so ergibt sich bei einem eintretenden Lichtstrom von 350 Lumen x $0,95^{4,5}$ ein austretender Lichtstrom von 278 Lumen. Dieser geringe Lichtstromverlust kann vor allem dadurch erreicht werden, daß der Innenkonus 18 innen verspiegelt ist. Weiters wird ein geringer Verlust noch dadurch sichergestellt, daß der zweite Brennpunkt 22 im Bereich rund um die Innenkonusachse 19, die auch gleichzeitig die Ellipsenhauptachse für den Ellipsoidreflektor 21 darstellt, eine Eintrittsöffnung 62 aufweist, deren Zentrum eben dieser Brennpunkt 22 des Ellipsoidreflektors 21 ist. Durch diese Eintrittsöffnung 62 kann der überwiegende Teil aller Lichtstrahlen mit einer großen Dirergenz in den dort achsial anschließenden Innenkonus 18 eintreten. In dem Innenkonus wird ein Reflexionswinkel 63 zwischen dem Innenkonus und dem Lichtstrahl bei jeder Reflexion an einer Stelle 53 verringert, sodaß bei einer entsprechenden Wahl des Konuswinkels 52 und der Länge 54 ein den anschließenden Lichtleitern 9 angepaßter Abstrahlungswinkel 25 erreicht werden kann.

Am Ende des Innenkonus 18 tritt daher ein Strahlenbündel mit einer genau begrenzten Fläche aus. Weiters wird durch diesen Innenkonus 18 erreicht, daß eine Fläche über einen größeren Durchmesser homogen beleuchtet werden kann und damit eine gute gleichwertige Lichtaufteilung über alle Stirnseiten 11 der Lichtleiter 9 erzielt wird. Geht man nun davon aus, daß der Konuswinkel 52 und die Länge 54 so gewählt ist, daß sich bei dem Durchmesser 49 einer Austrittsöffnung 64 eine Fläche von ca. 300 mm² ergibt, so können auf dieser Fläche ca. 80 Lichtleiter 9 mit einem Durchmesser von 2 mm angeordnet werden. Aus einem Lichtleiter mit einem Durchmesser von 2 mm tritt ein Lichtstrom mit 2,1 Lumen bis 2,5 Lumen aus. Bei einem Projektionswinkel von 0,05 sr pro 2 Lumen Lichtstrom ergibt dies ungefähr 40 cd (Candelar) pro Lichtpunkt in "weiß" natur. Dies ergibt bei 80 Lichtpunkten eine gesamte Lichtstärke von 3200 cd von der von der Lampe ursprünglich abgestrahlten Lichtstärke von ca. 4.800 cd.

Zieht man dazu noch in Betracht, daß es aufgrund der erfindungsgemäßen Lichtübertragungsvorrichtung nunmehr möglich ist, die gesamte Fläche des Strahlers gleichmäßig auszuleuchten, so ergibt dies insgesamt eine beträchtliche Qualitätsverbesserung gegenüber den bisher bekannten Übertragungsvorrichtungen.

Gleichermaßen ist es auch möglich, anstelle der ca. 80 Lichtleiter mit 2 mm Durchmesser ca. 40 Lichtleiter mit 2,5 mm Durchmesser zu verwenden. Außerdem ist es durch die besondere geometrische Form des Ellipsoides möglich, Glühlampen mit zwei Glühfäden 15 und 16 einzusetzen, wie dies bei Sicherungsanlagen vor allem im Eisenbahnbetrieb vielfach gewünscht wird. Dadurch ist auch eine automatische Lampenüberwachung mit Sicherheitsumschaltung immer möglich.

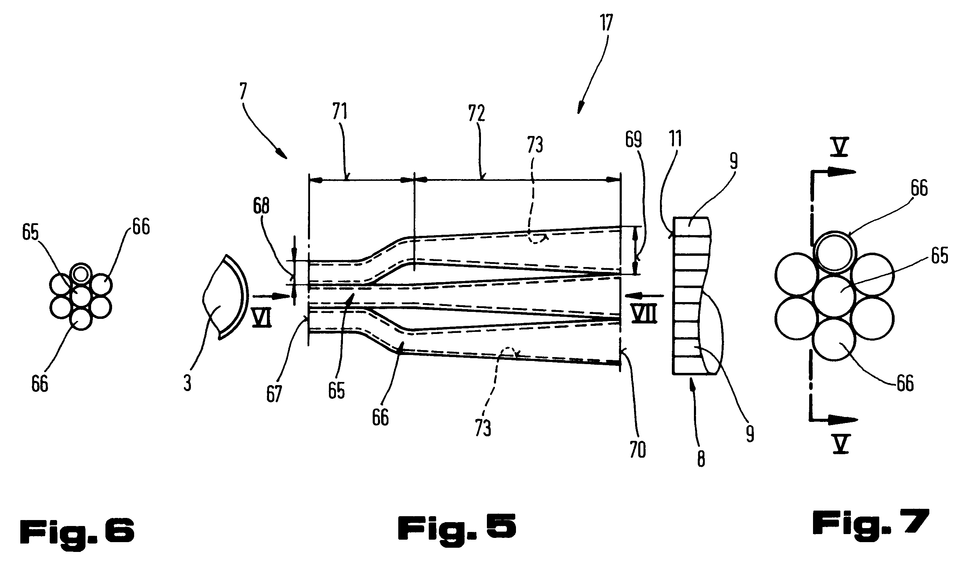

In den Fig.5 bis 7 ist eine andere Ausführungsform einer Lichtübertragungsvorrichtung 7 in Seitenansicht gezeigt. Diese Lichtübertragungsvorrichtung 7 weist mehrere Lichtübertragungselemente 65,66 auf, die wie besser aus Fig.6 und Fig.7 zu ersehen ist, im Bereich der einer Lampe 3 zugeordneten Stirnenden 67 einen kleineren Durchmesser 68 aufweisen als ein Durchmesser 69 im Bereich von Enden 70, die dem Bündel 8 aus Lichtleitern 9 zugeordnet sind. Wie dieser Darstellung zu entnehmen ist, weisen die beispielsweise ebenfalls als Lichtleiter ausgebildeten Lichtübertragungselemente 65,66 über einem Bereich 71 einen zylindrischen Querschnitt auf, während die in einem Bereich 72 mit einem Innenkonus 73 versehen sind. Die Versetzung der einzelnen Lichtleiter, die bevorzugt im Bereich 71 mit zylindrischen Querschnitt erfolgt, ist derart ausgelegt, daß sich, wie aus einem Vergleich der Fig.6 und 7 zu ersehen ist, sowohl im Bereich der Enden mit dem Durchmesser 68 als auch im Bereich der Enden mit dem Durchmesser 69 ein dicht aneinanderliegendes Bündel der Lichtübertragungselemente 65 und 66 gebildet ist, sodaß der Lichtverlust beim Auftreffen der von der Lampe 3 abgesandten Lichtstrahlung so gering wie möglich ist. Im Bereich der Enden 70 der Lichtübertragungselemente 65,66 kann eine gleichmäßige Ausleuchtung des gesamten die Lichtübertragungselemente 65,66 umhüllenden Hüllkreises sichergestellt werden, wenn die Stirnseite 11 der Lichtleiter 9 soweit von den Enden 70 der Lichtübertragungselemente 65,66 entfernt sind, daß sich durch den Divergenzwinkel eine fugenlose Überdeckung der Strahlungsbereiche der einzelnen Lichtübertragungselemente 65,66 ergibt.

Die einzelnen Lichtübertragungselemente 65 und 66 können nunmehr durch eigens geformte, mit verspiegelten Oberflächen versehenen Teilen aus Kunststoff oder Metall gebildet sein. Es ist aber auch andererseits möglich, Lichtleiter mit diesem speziellen Querschnittsverlauf und der speziellen Anordnung in Einzelanfertigung herzustellen, um diese beispielsweise im Bereich ihrer zylindrischen Enden, d.h. der Stirnenden 67, miteinander zu verpressen oder zu verschmelzen, sodaß der Strahlungsverlust auf ein Minimum reduziert werden kann.

Selbstverständlich ist es aber auch möglich, daß das Lichtübertragungselement 17 durch einen einzigen Lichtleiter mit einem ausreichend großen Durchmesser aus Glas oder Kunststoff gebildet sein kann.

Lediglich der Ordnung halber ist darauf hinzuweisen, daß selbstverständlich sowohl die Ausbildung des Ellipsoidreflektors 21 in Verbindung mit dem sphärischen Reflektor 30 als auch die Ausbildung des Lichtübertragungselementes 17 als solches bzw. die Verbindung zwischen den einzelnen Reflektoren und dem Lichtübertragungselement sowie dem Bündel aus Lichtleitern eine jeweils für sich eigenständige und voneinander unabhängige Erfindung bilden können.

**Bezugszeichenaufstellung**

| | |
|---|---|
| 1 Lampenanordnung | 41 Sockel |
| 2 Lampengehäuse | 42 Schwenkachse |
| 3 Lampe | 43 Rastvorrichtung |
| 4 Strahler | 44 Aufnahmeöffnung |
| 5 Lichtstrahl | 45 Verbindungsvorrichtung |
| 6 Lichtstrahl | 46 Mutter |
| 7 Lichtübertragungsvorrichtung | 47 Oberfläche |
| 8 Bündel | 48 Farbfilter |
| 9 Lichtleiter | 49 Durchmesser |
| 10 Haltevorrichtung | 50 Durchmesser |
| 11 Stirnseite | 51 Distanz |
| 12 Ende | 52 Konuswinkel |
| 13 Linsenanordnung | 53 Stelle |
| 14 Lichtbündel | 54 Länge |
| 15 Glühfaden | 55 Linie |
| 16 Glühfaden | 56 Kreisringfläche |
| 17 Lichtübertragungselement | 57 Linie |
| 18 Innenkonus | 58 Lichtstrahl |
| 19 Innenkonusachse | 59 Radius |
| 20 Brennpunkt | 60 Radius |
| 21 Ellipsoidreflektor | 61 Lichtstrahl |
| 22 Brennpunkt | 62 Eintrittsöffnung |
| 23 Stirnseite | 63 Reflexionswinkel |
| 24 Ebene | 64 Austrittsöffnung |
| 25 Abstrahlungswinkel | 65 Lichtübertragungselement |
| 26 Einfallswinkel | 66 Lichtübertragungselement |
| 27 Lichtstrahl | 67 Stirnende |
| 28 Verspiegelung | 68 Durchmesser |
| 29 Schlitz | 69 Durchmesser |
| 30 Reflektor | 70 Ende |
| 31 Lichtstrahl | 71 Bereich |
| 32 Ebene | 72 Bereich |
| 33 Bauteil | 73 Innenkonus |
| 34 Teil | |
| 35 Teil | |
| 36 Führungsvorrichtung | |
| 37 Paßbohrung | |
| 38 Paßstift | |
| 39 Ansatz | |
| 40 Lampenfassung | |

**Patentansprüche**

1.  Lampenanordnung, insbesondere für Signaleinrichtungen, mit einer in einem Lampengehäuse angeordneten Lampe und mit einem von dieser distanzierten Strahler und einer zwischen dem Lampengehäuse und dem Strahler angeordneten Lichtübertragungsvorrichtung, dadurch gekennzeichnet, daß die Lichtübertragungsvorrichtung (7) eine Mehrzahl von Lichtleiter (9) umfaßt und daß zwischen den der Lampe zugewandten Stirnseiten (11) der Lichtleiter (9) und der Lampe (3) ein mit einem Innenkonus (18) versehenes Lichtübertragungselement (17) vorgesehen ist und der Innenkonus (18) sich in Richtung der Stirnseiten (11) der Lichtleiter (9) erweitert.

2. Lampenanordung nach Anspruch 1, dadurch gekennzeichnet, daß die Lampe (3) in einem Brennpunkt eines Ellipsoidreflektors (21) angeordnet ist, dessen weiterer Brennpunkt (22) in einer die Stirnseite (23) des Lichtübertragungselementes (17) aufnehmenden, senkrecht zur Innenkonusachse (19) verlaufenden Ebene (24) angeordnet ist.

3. Lampenanordnung nach Anspruch 1 oder 2, dadurch gekennzeichnet, daß sich der Ellipsoidreflektor (21) von der dem Lichtübertragungselement (17) abgewendeten Seite bis in den Bereich, insbesondere mittig, zwischen den beiden Brennpunkten (20,22) erstreckt.

4. Lampenanordnung nach einem oder mehreren der Ansprüche 1 bis 3, dadurch gekennzeichnet, daß der Bereich zwischen dem Ellipsoidreflektor (21) und dem Lichtübertragungselement (17) durch einen sphärischen, insbesondere kugelkalottenförmigen Reflektor (30) verschlossen ist, dessen Mittelpunkt im Bereich des der Lampe (3) zugeordneten Brennpunkts (20) des Ellipsoidreflektors (21) angeordnet ist.

5. Lampenanordnung nach einem oder mehreren der Ansprüche 1 bis 4, dadurch gekennzeichnet, daß der Radius (59) des kugelkalottenförmigen Reflektors (30) dem Radius (60) des Ellipsoidreflektors (21) in einer senkrecht zur Innenkonusachse (19) ausgerichteten, durch den die Lampe (3) aufnehmenden Brennpunkt (20) verlaufende Ebene entspricht.

6. Lampenanordnung nach einem oder mehreren der Ansprüche 1 bis 5, dadurch gekennzeichnet, daß das vom Ellipsoidreflektor (21) reflektierte Lichstrahlenbündel bezogen auf die Innenkonusachse (19) einen in Richtung der Lampe (3) gerichteten maximalen Einfallswinkel (26) von ca. 40° bis 90°, bevorzugt 67° aufweist.

7. Lampenanordung nach einem oder mehreren der Ansprüche 1 bis 6, dadurch gekennzeichnet, daß eine Länge (54) zwischen dem von der Lampe (3) abgewendeten Brennpunkt (22) des Ellipsoidreflektors (21) und den der Lampe (3) zugewandten Stirnseiten (11) der Enden der Lichtleiter (9) sowie der Innenkonuswinkel derart bemessen ist, daß der Abstrahlungswinkel (25) des aus dem Lichtübertragungselement (17) austretenden Lichtbündels bezogen auf die Innenkonusachse (19) zwischen 15° und 40°, bevorzugt ca. 26° beträgt.

8. Lampenanordnung nach einem oder mehreren der Ansprüche 1 bis 7, dadurch gekennzeichnet, daß die Länge (54) des Lichtübertragungselementes (17) und der Innenkonuswinkel derart bemessen sind, daß ein Lichtstrahl (5,6) zwischen zwei- und sechsmal, bevorzugt maximal 4mal innerhalb des Lichtübertragungselementes (17) umgelenkt wird.

9. Lampenanordnung nach einem oder mehreren der Ansprüche 1 bis 8, dadurch gekennzeichnet, daß der Durchmesser der Austrittsöffnung (64) des Lichtübertragungselementes (17) etwa dem Durchmesser (49) des Bündels (8) der Lichtleiter (9) entspricht.

10. Lampenanordnung nach einem oder mehreren der Ansprüche 1 bis 9, dadurch gekennzeichnet, daß zwischen der Austrittsöffnung (64) und den Stirnseiten (11) der dieser zugewandten Enden der Lichtleiter (9) ein Filter, insbesondere ein Farbfilter (48), angeordnet ist.

11. Lampenanordnung nach einem oder mehreren der Ansprüche 1 bis 10, dadurch gekennzeichnet, daß der Innenkonus (18) mit einer verspiegelten Oberfläche (47) versehen ist.

12. Lampenanordnung nach einem oder mehreren der Ansprüche 1 bis 11, dadurch gekennzeichnet, daß der Innenkonus (18) durch einen Innenkegel gebildet ist.

13. Lampenanordnung nach einem oder mehreren der Ansprüche 1 bis 14, dadurch gekennzeichnet, daß der Ellipsoidreflektor (21) mit einer spektral-selektiven Verspiegelung (28) versehen ist, die alle für den gewünschten Farbton nicht benötigten Wellenlängen aus dem Lichtspektrum der Lampe (3) sowie auch die Infrarotstrahlen ungehindert durchtreten läßt.

**14.** Lampenanordnung nach einem oder mehreren der Ansprüche 1 bis 13, dadurch gekennzeichnet, daß der kugelkalottenförmige Reflektor (30) mit einer spektral-selektiven Verspiegelung versehen ist, die alle für den gewünschten Farbton nicht benötigten Wellenlängen aus dem Lichtspektrum der Lampe (3) sowie auch die Infrarotstrahlen ungehindert durchtreten läßt.

**15.** Lampenanordnung nach einem oder mehreren der Ansprüche 1 bis 14, dadurch gekennzeichnet, daß die Lampe (3) zwei Glühfäden (15,16) aufweist.

**16.** Lampenanordnung nach einem oder mehreren der Ansprüche 1 bis 15, dadurch gekennzeichnet, daß der Sockel (41) der Lampe (3) den Ellipsoidreflektor (21) durchsetzt.

**17.** Lampenanordnung nach einem oder mehreren der Ansprüche 1 bis 16, dadurch gekennzeichnet, daß ein Ansatz (39) des Ellipsoidreflektors (21) die Lampenfassung (40) lagert.

**18.** Lampenanordnung nach einem oder mehreren der Ansprüche 1 bis 17, dadurch gekennzeichnet, daß der Innenkonus (18), der kugelkalottenförmige Reflektor (30) und bzw. oder eine Aufnahmeöffnung (44) für die Haltevorrichtung (10) des Lichtleiterbündels und bzw. oder der Ellipsoidreflektor (21) einen gemeinsamen Bauteil bilden.

**19.** Lampenanordnung nach einem oder mehreren der Ansprüche 1 bis 18, dadurch gekennzeichnet, daß der Bauteil (33) aus mehreren Teilen (34,35), bevorzugt aus zwei Teilen, besteht und vorzugsweise in einer die Innenkonusachse (19) durchsetzenden Ebene (32) geteilt ist.

**20.** Lampenanordnung nach einem oder mehreren der Ansprüche 1 bis 19, dadurch gekennzeichnet, daß der Ellipsoidreflektor (21) über eine senkrecht zur Innenkonusachse (19) verlaufende Schwenkachse (42) mit dem Bauteil (33) verbunden ist.

**21.** Lampenanordnung nach einem oder mehreren der Ansprüche 1 bis 20, dadurch gekennzeichnet, daß der Ellipsoidreflektor (21) auf der von der Schwenkachse (42) abgewendeten Seite über eine Arretiervorrichtung, insbesondere eine Rastvorrichtung (43), mit dem Bauteil (33) verriegelbar ist.

**22.** Lampenanordnung nach einem oder mehreren der Ansprüche 1 bis 21, dadurch gekennzeichnet, daß die Teile (34,35) des Bauteils (33) mit deckungsgleich gegenüberliegenden Teilen von Führungsvorrichtungen, insbesondere Paßstiften (38) und Paßbohrungen (37), versehen sind.

**23.** Lampenanordnung nach einem oder mehreren der Ansprüche 1 bis 22, dadurch gekennzeichnet, daß die zwischen dem Reflektor (30) und dem Ellipsoidreflektor (21) verbleibende Kreisringfläche (56) verspiegelt, insbesondere spektral selektiv verspiegelt, ist.

**24.** Lampenanordnung nach einem oder mehreren der Ansprüche 1 bis 23, dadurch gekennzeichnet, daß der Ellipsoidreflektor (21) aus mehreren Teilen besteht.

**25.** Lampenanordnung nach einem oder mehreren der Ansprüche 1 bis 24, dadurch gekennzeichnet, daß zwischen dem Ellipsoidreflektor (21) und dem Reflektor (30) bzw. dem Bauteil (33) in einander gegenüberliegenden Bereichen Lüftungsschlitze angeordnet sind.

**26.** Lampenanordnung nach einem oder mehreren der Ansprüche 1 bis 25, dadurch gekennzeichnet, daß zwischen den der Lampe (3) zugewandten Enden der Lichtleiter (9) und der Lampe (3) mehrere jeweils mit einem Innenkonus (73) versehene Lichtübertragungselemente (65,66) vorgesehen sind.

**27.** Lampenanordnung nach einem oder mehreren der Ansprüche 1 bis 26, dadurch gekennzeichnet, daß das oder die Lichtübertragungselemente (65,66) durch zumindest über einen Teil ihrer Länge konische Lichtleiter gebildet sind, die sich in Richtung der Stirnseiten (11) der zu einem Bündel (8) zusammengefaßten, zylindrischen Lichtleiter (9) erweitern.

**Claims**

**1.** A lamp arrangement, in particular for signalling devices, with a lamp arranged in a lamp housing and with an emitter arranged at a distance therefrom and a light transmission device arranged between the lamp housing and the emitter, characterised in that the light transmission device (7) comprises a plurality of photoconductors (9) and that between the end faces (11) of the photoconductors (9), facing the lamp, and the lamp (3) a light transmission element (17) is provided which is provided with an inner cone (18) and the inner cone (18) widens in the direction of the end faces (11) of the photoconductors (9).

2. A lamp arrangement according to Claim 1, characterised in that the lamp (3) is arranged in a focus of an ellipsoid reflector (21), the further focus (22) of which is arranged in a plane (24) accommodating the end face (23) of the light transmission element (17), running vertically to the inner cone axis (19).

3. A lamp arrangement according to Claim 1 or 2, characterised in that the ellipsoid reflector (21) extends from the side facing away from the light transmission element (17) into the region, in particular centrally, between the two foci (20,22).

4. A lamp arrangement according to one or more of Claims 1 to 3, characterised in that the region between the ellipsoid reflector (21) and the light transmission element (17) is closed by a spherical reflector (30), in particular in the shape of a spherical calotte, the mid-point of which is arranged in the region of the focus (20) of the ellipsoid reflector (21) associated with the lamp (3).

5. A lamp arrangement according to one or more of Claims 1 to 4, characterised in that the radius (59) of the reflector (30) in the shape of a spherical calotte corresponds to the radius (60) of the ellipsoid reflector (21) in a plane aligned vertically to the inner cone axis (19), running through the focus (20) accommodating the lamp (3).

6. A lamp arrangement according to one or more of Claims 1 to 5, characterised in that the beam of light reflected by the ellipsoid reflector (21) in relation to the inner cone axis (19) has a maximum angle of incidence (26) directed in the direction of the lamp (3) of approximately 40° to 90°, preferably 67°.

7. A lamp arrangement according to one or more of Claims 1 to 6, characterised in that a length (54) between the focus (22) of the ellipsoid reflector (21) facing away from the lamp (3) and the end faces (11), facing the lamp (3) of the ends of the photoconductors (9) and also the inner cone angle is dimensioned such that the angle of reflection (25) of the light beam emerging from the light transmission element (17) in relation to the inner cone axis (19) amounts to between 15° and 40°, preferably approximately 26°.

8. A lamp arrangement according to one or more of Claims 1 to 7, characterised in that the length (54) of the light transmission element (17) and the inner cone angle are dimensioned such that a light beam (5,6) is deflected between two and six times, preferably a maximum of 4 times inside the light transmission element (17).

9. A lamp arrangement according to one or more of Claims 1 to 8, characterised in that the diameter of the outlet opening (64) of the light transmission element (17) corresponds approximately to the diameter (49) of the beam (8) of the photoconductors (9).

10. A lamp arrangement according to one or more of Claims 1 to 9, characterised in that between the outlet opening (64) and the end faces (11) of the ends of the photoconductors (9) facing thereto, a filter, in particular a colour filter (48), is arranged.

11. A lamp arrangement according to one or more of Claims 1 to 10, characterised in that the inner cone (18) is provided with a reflective surface (47).

12. A lamp arrangement according to one or more of Claims 1 to 11, characterised in that the inner cone (18) is formed by an inner taper.

13. A lamp arrangement according to one or more of Claims 1 to 14, characterised in that the ellipsoid reflector (21) is provided with a spectral-selective reflective coating (28), which allows all wavelengths from the light spectrum of the lamp (3) not required for the desired colour and also the infrared rays to pass through unhindered.

14. A lamp arrangement according to one or more of Claims 1 to 13, characterised in that the reflector (30) in the shape of a spherical calotte is provided with a spectral-selective reflective coating, which allows all the wavelengths from the light spectrum of the lamp (3) not required for the desired colour and also the infrared rays to pass through unhindered.

15. A lamp arrangement according to one or more of Claims 1 to 14, characterised in that the lamp (3) has two filaments (15,16).

16. A lamp arrangement according to one or more of Claims 1 to 15, characterised in that the socket (41) of the lamp (3) passes through the ellipsoid reflector (21).

17. A lamp arrangement according to one or more of Claims 1 to 16, characterised in that an extension (39) of the ellipsoid reflector (21) supports the lamp holder (40).

18. A lamp arrangement according to one or more of Claims 1 to 17, characterised in that the inner cone (18), the reflector (30) in the shape of a spherical calotte, and/or a receiving opening (44) for the holding device (10) of the photoconductor beam and/or the ellipsoid reflector (21) form one common component.

19. A lamp arrangement according to one or more of Claims 1 to 18, characterised in that the component (33) consists of several parts (34,35), preferably of two parts, and preferably is divided in a plane (32) passing through the inner cone axis (19).

20. A lamp arrangement according to one or more of Claims 1 to 19, characterised in that the ellipsoid reflector (21) is connected with the component (33) via a pivot axis (42) running vertically to the inner cone axis (19).

21. A lamp arrangement according to one or more of Claims 1 to 20, characterised in that the ellipsoid reflector (21) is able to be locked with the component (33) on the side facing away from the pivot axis (42) by means of an arresting device, in particular a detent device (43).

22. A lamp arrangement according to one or more of Claims 1 to 21, characterised in that the parts (34,35) of the component (33) are provided with parts, lying congruently with respect to each other, of guide devices, in particular fitting pins (38) and fitting bores (37).

23. A lamp arrangement according to one or more of Claims 1 to 22, characterised in that the circular ring surface (56) remaining between the reflector (30) and the ellipsoid reflector (21) is reflective, in particular spectrally selectively reflective.

24. A lamp arrangement according to one or more of Claims 1 to 23, characterised in that the ellipsoid reflector (21) consists of several parts.

25. A lamp arrangement according to one or more of Claims 1 to 24, characterised in that between the ellipsoid reflector (21) and the reflector (30) or the component (33), ventilation slots are arranged in regions lying opposite each other.

26. A lamp arrangement according to one or more of Claims 1 to 25, characterised in that between the ends of the photoconductors (9), facing the lamp (3), and the lamp (3) several light transmission elements (65,66) are provided, which are provided in each case with an inner cone (73).

27. A lamp arrangement according to one or more of Claims 1 to 26, characterised in that the light transmission element or elements (65,66) are formed by photoconductors which are conical at least over a part of their length and which widen in the direction of the end faces (11) of the cylindrical photoconductors (9) combined into a beam (8).

**Revendications**

1. Agencement de lampe, notamment pour installation de signalisation, comprenant une lame disposée dans un boîtier de lampe et un émetteur de rayonnement situé à une certaine distance de celle-ci et un dispositif de transmission de lumière placé entre le boîtier de lampe et l'émetteur de rayonnement, caractérisé en ce que le dispositif de transmission de lumière (7) comporte une pluralité de conducteurs de lumière (9), en ce qu'entre les côtés frontaux (11) tournés vers la lampe des conducteurs de lumière (9) et la lampe (3) est prévu un élément de transmission de lumière (17) pourvu d'un cône interne (18), et que le cône interne (18) va en s'élargissant dans la direction des côtés frontaux (11) des conducteurs de lumière (9).

2. Agencement de lampe selon la revendication 1, caractérisé en ce que la lampe (3) est disposée dans un foyer d'un réflecteur ellipsoïde (21), dont l'autre foyer (22) est disposé dans un plan (24) recevant le côté frontal (23) de l'élément de transmission de lumière (17) et s'étendant perpendiculairement à l'axe de cône interne (19).

3. Agencement de lampe selon la revendication 1 ou 2, caractérisé en ce que le réflecteur ellipsoïde (21) s'étend du côté éloigné de l'élément de transmission de lumière (17) jusqu'à dans la zone, notamment médiane, entre les deux foyers (20, 22).

4. Agencement de lampe selon l'une des revendications 1 à 3, caractérisé en ce que la zone entre le réflecteur ellipsoïde (21) et l'élément de transmission de lumière (17) est fermé par un réflecteur (30) notamment en forme d'une calotte sphérique, dans le point central est disposé dans la zone du foyer (20) associé à la lampe (3), du réflecteur ellipsoïde (21).

5. Agencement de lampe selon l'une des revendications 1 à 4, caractérisé en ce que le rayon (59) du réflecteur (30), en forme de calotte sphérique (30) correspond au rayon (60) du réflecteur ellipsoïde (21) dans un plan orienté perpendiculairement à l'axe de cône interne (19) et à travers le foyer (20) recevant la lampe (3).

6. Agencement de lampe selon l'une des revendications 1 à 5, caractérisé en ce que le faisceau lumineux réfléchi par le réflecteur ellipsoïde (21) comprend, par rapport à l'axe de cône interne (19), un angle d'incidence (26) maximal orienté dans la direction de lampe (3), d'approximativement 40 à 90°, préférablement de 67°.

7. Agencement de lampe selon l'une des revendications 1 à 6, caractérisé en ce qu'une longueur (54) entre le foyer (22) éloigné de la lampe (3), du réflecteur ellipsoïde (21), et les côtés frontaux (11) orientés vers la lampe (3), des extrémités des conducteurs de lumière (9), ainsi que l'angle de cône interne sont dimensionnés de telle façon que l'angle d'émission de rayonnement (25) du faisceau lumineux sortant de l'élément de transmission de lumière (17) soit compris entre 15° et 40°, préférablement de 26°c, par rapport à l'axe de cône interne (19).

8. Agencement de lampe selon l'une des revendications 1 à 7, caractérisé en ce que la longueur (54) de l'élément de transmission de lumière (17) et l'angle de cône interne sont dimensionnés de telle façon qu'un faisceau lumineux (5, 6) soit renvoyé entre deux et six fois, préférablement maximalement quatre fois à l'intérieur de l'élément de transmission de lumière (17).

9. Agencement de lampe selon l'une des revendications 1 à 8, caractérisé en ce que le diamètre de l'ouverture de sortie (6) de l'élément de transmission de lumière (17) correspond approximativement au diamètre (49) du faisceau (8) des conducteurs de lumière (9).

10. Agencement de lampe selon l'une des revendications 1 à 9, caractérisé en ce qu'entre l'ouverture de sortie (34) et les côtés frontaux (11) des extrémités des conducteurs de lumière (9), qui sont orientés vers celles-ci, est disposé un filtre, notamment un filtre chromatique (48).

11. Agencement de lampe selon l'une des revendications 1 à 10, caractérisé en ce que cône interne (18) est pourvu d'une surface miroir (27).

12. Agencement de lampe selon l'une des revendications 1 à 11, caractérisé en ce que le cône interne (18) est formé par un cône intérieur.

13. Agencement de lampe selon l'une des revendications 1 à 14, caractérisé en ce que le réflecteur ellipsoïde (21) est pourvu d'un dépôt de couches réfléchissantes (28), à sélection spectrale, qui laisse passer sans gêne les longueurs d'onde du spectre de lumière de la lampe (3) qui ne sont pas nécessaires pour la chrominance souhaitée, ainsi que des rayons infrarouge.

14. Agencement de lampe selon l'une des revendications 1 à 13, caractérisé en ce que le réflecteur en forme de calotte sphérique (30) est pourvu d'un dépôt de couches réfléchissantes à sélection spectrale, qui laisse passer sans gêne toutes les longueurs d'onde du spectre de lumière de la lampe (3), qui ne sont pas nécessaires pour la chromacité souhaitée, ainsi que les rayons infrarouge.

15. Agencement de lampe selon l'une des revendications 1 à 14, caractérisé en ce que la lampe (3) comprend deux filaments incandescents (15, 16).

16. Agencement de lampe selon l'une des revendications 1 à 15, caractérisé en ce que le socle (41) de la lampe (3) est traversé par le réflecteur ellipsoïde (21).

17. Agencement de lampe selon l'une des revendications 1 à 16, caractérisé en ce qu'un embout (39) du réflecteur ellipsoïde (21) loge la douille de lampe (40).

18. Agencement de lampe selon l'une des revendications 1 à 1è, caractérisé en ce que le cône interne (18), le réflecteur en forme de calotte sphérique (30) et/ou une ouverture de réception (44) pour le dispositif de maintien ou de support (10) du faisceau des conducteurs de lumière et/ou réflecteur ellipsoïde (21) forment une pièce de construction commune.

19. Agencement de lampe selon l'une des revendications 1 à 18, caractérisé en ce que la pièce de construction (33) est formée par plusieurs pièces (34, 35), de préférence de deux pièces, et est divisée, de façon préférée, dans un plan (32) traversant l'axe de cône interne (19).

20. Agencement de lampe selon l'une des revendications 1 à 19, caractérisé en ce que le réflecteur ellipsoïde (21) est relié à la pièce de construction (33), par l'intermédiaire d'un axe de pivotement (42) s'étendant perpendiculairement à l'axe de cône interne (19).

21. Agencement de lampe selon l'une des revendications 1 à 20, caractérisé en ce que le réflecteur ellipsoïde (21) est verrouillable avec la pièce de construction (33) sur le côté éloigné de l'axe de pivotement (42), par l'intermédiaire d'un dispositif d'arrêt, notamment d'un dispositif d'encliquetage (43).

22. Agencement de lampe selon l'une des revendications 1 à 21, caractérisé en ce que les pièces (34, 35) de la pièce de construction (33) sont pourvues de pièces coïncidantes, situées en regard, de dispositifs de guidage, notamment de goupilles d'ajustage ou d'assemblage (38) et d'alésages d'ajustage (37).

23. Agencement de lampe selon l'une des revendications 1 à 22, caractérisé, caractérisé en ce que la surface de l'anneau circulaire (56) restante entre le réflecteur (30) et le réflecteur ellipsoïde (21) est pourvue de couches réfléchissantes, notamment de couches réfléchissantes à sélection spectrale.

24. Agencement de lampe selon l'une des revendications 1 à 23, caractérisé en ce que le réflecteur ellipsoïde (21) se compose de plusieurs parties.

25. Agencement de lampe selon l'une des revendications 1 à 24, caractérisé en ce qu'entre le réflecteur ellipsoïde (21) et le réflecteur (30) ou la pièce de construction (33) sont disposés des fentes d'aération dans des zones situées mutuellement en regard.

26. Agencement de lampe selon l'une des revendications 1 à 25, caractérisé en ce qu'entre les extrémités adjacentes aux conducteurs de lumière (9) et la lampe (3) sont prévus plusieurs éléments de transmission de lumière (65, 66) pourvus d'un cône interne (73).

27. Agencement de lampe selon l'une des revendications 1 à 26, caractérisé en ce que le ou les éléments de transmission de lumière (65, 66) sont formés par des conducteurs de lumière coniques au moins sur une partie de leur longueur et s'élargissant en direction des côtés frontaux (11) pour former un faisceau (8) de conducteurs de lumière (8) réunis et cylindriques.

**Fig. 1**

**Fig. 2**

**Fig. 3**

Fig. 4

EP 0 401 711 B1

Fig. 6

Fig. 5

Fig. 7

EP 0 401 711 B1